# FASCICULE DE BREVET EUROPEEN

(11) **EP 2 512 727 B1**
(45) Date de publication et mention de la délivrance du brevet: **21.02.2018**
(21) Numéro de dépôt: 10794943.0
(22) Date de dépôt: 08.12.2010
(51) Int. Cl.: B23P 6/00, B23K 26/32, F01D 5/00, B23K 26/342, B22F 5/04, B22F 7/06, B23K 35/32, B23K 35/02, C22F 1/18, B23K 101/00, B23K 103/14

(54) **PROCÉDÉ DE RÉPARATION D'UNE AUBE EN TITANE PAR RECHARGEMENT LASER ET COMPRESSION HIP MODÉRÉE**
VERFAHREN ZUR REPARATUR EINER TITANKLINGE MITTELS LASERAUFLADUNG UND MÄSSIGER HIP-KOMPRESSION
METHOD FOR REPAIRING A TITANIUM BLADE BY LASER RECHARGING AND MODERATE HIP PRESSING

(30) Priorité: 14.12.2009 FR 0958956
(43) Date de publication de la demande: 24.10.2012
(73) Titulaire: Safran Aircraft Engines, 75015 Paris (FR)
(72) Inventeur: DERRIEN, Gérard, F-78800 Houilles (FR)
(74) Mandataire: Gevers & Orès
(86) Numéro de dépôt international: PCT/EP2010/069220
(87) Numéro de publication internationale: WO 2011/073071

(56) Documents cités:
- EP-A1- 1 643 011
- EP-A1- 1 897 972
- EP-A2- 1 743 729
- WO-A1-2007/027177
- LIU J H ET AL: "Manufacturing near dense metal parts via indirect selective laser sintering combined with isostatic pressing", APPLIED PHYSICS A; MATERIALS SCIENCE & PROCESSING, SPRINGER, BERLIN, DE LNKD- DOI:10.1007/S00339-007-4159-6, vol. 89, no. 3, 28 juin 2007 (2007-06-28), pages 743-748, XP019540466, ISSN: 1432-0630
- M Vanderhasten ET AL: "AME HIGH TEMPERATURE DEFORMATION OF Ti6Al4V AT LOW STRAIN RATE", Metalurgija, 1 January 2005 (2005-01-01), pages 195-200, XP055327571, Retrieved from the Internet: URL:http://metalurgija.org.rs/mjom/vol11/N o%203/03-VANDERHASTEN.pdf [retrieved on 2016-12-09]

## Description

Le domaine de la présente invention est celui des turbomachines aéronautiques, et en particulier celui de la réparation des aubes de compresseur de ces turbomachines, selon le préambule de la revendication 1.

Un tel procédé est décrit dans le document EP1643011 A1. Les turbomachines aéronautiques comprennent typiquement un ou plusieurs compresseurs, placés en série, dans lesquels de l'air est comprimé pour être ensuite injecté dans une chambre de combustion. L'air y est alors mélangé à un carburant puis brulé. Les gaz brûlés passent dans un ou plusieurs étages de turbine, qui prélèvent la puissance nécessaire à l'entraînement du ou des compresseurs, puis ils sont éjectés dans une tuyère pour produire la poussée recherchée. Dans les moteurs civils modernes à double flux et fort taux de dilution, un étage supplémentaire de compresseur, appelé fan, est placé en avant du premier compresseur (compresseur basse pression). Les aubes d'un tel fan sont de grandes dimensions et sont exposées aux agressions en provenance de la veine d'air, telles que les intempéries, les poussières ou les corps étrangers qui seraient absorbés par le moteur.

Du fait de l'érosion provoquée par ces agressions, les aubes de fan présentent, plus ou moins rapidement, une usure qu'il convient de pallier, soit en cherchant à augmenter la durée de vie autorisée pour des aubes abimées, soit en imaginant des solutions de remise à niveau pour ces aubes.

Plusieurs solutions ont été proposées pour recharger le bord d'attaque, ou toute autre partie des aubes de compresseur, après leur érosion en utilisation. La demande de brevet internationale WO2007/027177 déposée par la société Honeywell propose ainsi une méthode de rechargement des aubes de fan en alliage de titane par un procédé dit de projection dynamique par gaz froid. Cette méthode porte sur la projection d'une poudre métallique dont les particules s'agrègent sur l'aube du fait de leur énergie cinétique et qui forment ainsi une couche qui peut redonner à l'aube son profil initial. Cette méthode présente l'inconvénient de laisser subsister des porosités importantes dans la couche projetée. Pour résoudre ce problème, la méthode décrite dans la demande de brevet prévoit la réalisation d'une opération de compression isostatique à chaud, dite HIP (pour hot isostatic pressing) dans des conditions relativement sévères, puisqu'il faut mettre la pièce réparée sous une pression de 700 à 1000 bars et à une température de 1400 à 1500 °C, pendant une heure, puis la laisser à une température de l'ordre de 900°C pendant plusieurs heures.

L'inconvénient associé à une telle montée en température de la pièce est que le titane perd beaucoup de sa rigidité et que l'aube a alors tendance à se déformer. Par ailleurs la technique employée d'une projection d'un métal en poudre par gaz froid ne permet pas un rechargement avec un positionnement suffisamment précis. Cette technique doit donc être complétée par un usinage qui redonne à l'aube sa forme géométrique précise.

Une autre solution envisageable est le rechargement par laser qui permet d'obtenir des cotes plus précises et permet ainsi de supprimer les opérations d'usinage final, ou à tout le moins de les réduire à de simples opérations d'ajustage, effectuées manuellement. Le rechargement par laser est une technique de rechargement par soudage qui consiste à déposer sur la surface d'une pièce une couche de métal. Le métal d'apport est apporté sous forme de fil ou de poudre par un gaz inerte, puis injecté latéralement ou coaxialement dans le faisceau laser. Avec ce système une partie de l'énergie délivrée par le faisceau laser sert à préchauffer la poudre dans le faisceau alors qu'une fraction d'énergie transmise à travers le jet de poudre permet de refondre superficiellement la surface du substrat. Le bain de fusion est entretenu par l'apport d'énergie du laser.

Cette solution permet de restaurer une aube directement à ses cotes finies mais elle n'élimine pas complètement les problèmes liés à une compacité insuffisante. Même si les porosités observées sont, avec un réglage adapté du laser, nettement moins importantes que dans le cas précédent il reste nécessaire de recourir à un procédé d'élimination de celles-ci après le rechargement pour garantir une tenue en fatigue suffisante dans le cas d'aubes de compresseur en alliage de titane.

D'autres méthodes de rechargement par projection de métal, suivis d'opérations de compaction telles que la compression HIP, ont été proposées, comme par exemple celles décrites dans les demandes de brevet EP1643011 et EP 1743729 de la société General Electric ou encore EP 1897972 d'United Technologies. On constate que ces compressions isostatiques à chaud sont réalisées dans des conditions de température élevées puisqu'elles dépassent généralement la température de 700° qui correspond, pour l'alliage de titane TA6V à celle de sa recristallisation. Dans le premier document la température mise en oeuvre se situe entre "sensiblement 700°" et "sensiblement 950°", alors que dans le troisième elle va de 800 à 1000° ; elle n'est pas précisée dans le second document.

De même, les pressions appliquées au cours de ces compressions HIP (variant entre 14 et 28 bars pour le premier, et de l'ordre de 10 bars pour le troisième) restent, ici, globalement relativement faibles, ce qui n'est pas très favorable pour la suppression des porosités. La présente invention a pour but de remédier à ces inconvénients en proposant une méthode de réparation qui ne présente pas au moins certains des défauts de l'art antérieur et, en particulier, qui élimine les éventuelles porosités créées lors du rechargement, sans risque de déformation du profil de l'aube

A cet effet, l'invention a pour objet un procédé de réparation d'une aube d'un compresseur de turbomachine en alliage de titane par rechargement des parties endommagées au moyen de la projection d'une poudre dudit métal sur ladite pièce, comprenant une étape de rechargement par laser desdites parties endommagées à l'aide de ladite poudre, caractérisé en ce que ladite étape est suivie d'une étape de compression isostatique à chaud, la température maximale imposée lors de ladite compression isostatique étant au plus égale à 680°C. En restant en dessous de la température de recristallisation du métal on évite les déformations de la pièce métallique et on peut la réaliser aux cotes finies dès l'opération de rechargement laser. Aucune opération de fraisage n'est alors nécessaire après la compression HIP pour redonner à la pièce sa forme géométrique précise.

Dans un mode particulier de réalisation la pièce est maintenue à la température maximale pendant une durée au moins égale à 2 heures.

L'augmentation de la durée du maintien à la température maximale permet de compenser la baisse de ladite température maximale et d'obtenir un résultat analogue.

Préférentiellement la pression de la compression isostatique est au moins égale à 970 bars.

Dans un mode particulier de réalisation la montée en température n'excède pas 350°C/h.

Dans un autre mode particulier de réalisation la décroissance de la température en fin de compression isostatique n'excède pas 100°C/h.

Avantageusement la décroissance de la pression en fin de compression isostatique n'excède pas 20 bars/min.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence au dessin schématique annexé.

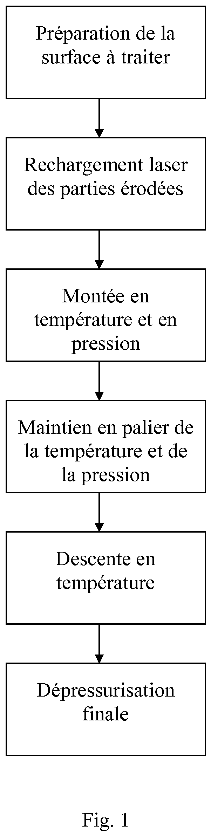

La figure 1 est une vue séquentielle des étapes de réalisation d'un procédé de réparation d'aubes en alliage de titane selon un mode de réalisation de l'invention.

Le précédé selon l'invention se déroule de la façon suivante :
La surface de la pièce à réparer est tout d'abord préparée de façon tout à fait classique, en suivant une méthode connue de l'homme du métier.

Elle est ensuite disposée dans un appareillage de rechargement par laser où les parties érodées sont reconstituées. Ce rechargement est effectué sans mettre de gabarit de masquage, le procédé étant suffisamment précis pour remettre du métal aux endroits manquants sans déborder au-delà de la zone à recharger.

La pièce ainsi obtenue présente encore des porosités d'une ampleur faible (entre 10 et 40 microns), mais qui restent suffisantes pour initier des départs de criques en fatigue, et donc qui empêchent de redonner à l'aube une durée de vie restante égale à celle qu'elle avait avant le rechargement. C'est pourquoi il est nécessaire de compléter ce rechargement par une opération de densification.

Comme on l'a vu plus haut une opération classique de densification par compression isostatique à chaud, dans les conditions de température habituellement pratiquées, aboutirait à des déformations de la géométrie de l'aube qui la rendraient impropre à une remise en service.

L'invention propose de réaliser une opération de compression isostatique à chaud dans des conditions de température moins élevées que celles des méthodes HIP habituellement employées. Moyennant une augmentation du temps de station à cette température, un résultat analogue en matière de densification est alors obtenu.

Dans le cas d'une aube en alliage de titane, tel que du TA6V, la pièce est, dans un premier temps, portée à une température au plus égale à 680°C sous une atmosphère neutre du type argon, pendant une durée d'environ 2 heures. Simultanément la pression de l'enceinte dans laquelle se trouve la pièce, est montée vers 1000 bars +/- 30 bars. La température préférentielle pour conduire cette compression HIP se situe à 665°C, avec une tolérance de plus ou moins 15°.

La pièce est maintenue dans ces conditions pendant une durée d'environ 2 heures.

Après cette station à au plus 680°C la température de l'enceinte est progressivement ramenée à 400°C, au cours d'une durée supplémentaire d'environ 2 heures 30.

Enfin la pression est ramenée à la valeur atmosphérique selon une loi de décroissance qui reste constamment inférieure à un taux de 20 bars/min.

De façon préférentielle la montée en température s'effectue avec un gradient de 350°C par heure et la décroissance avec un gradient de 100°C/h.

Les résultats obtenus après l'application de cette méthode à une aube de fan ont montré, avant et après densification :
- par photogrammétrie sur la pièce, que la géométrie de l'aube était inchangée,
- par tomographie sur des éprouvettes qui avaient subi le même procédé, que les porosités avaient disparu, ou tout au moins, étaient devenues d'une taille indétectable à l'aide du moyen utilisé.

Des essais en caractérisation mécaniques ont confirmé que l'aube rechargée se comportait comme une aube non rechargée et donc qu'il était possible de lui donner une durée de vie restante identique à celle qu'elle aurait eue sans réparation.

On constate que la température maximale utilisée lors de la compression HIP se situe en dessous de 680°C, c'est-à-dire en dessous de la température de recristallisation de l'alliage de titane TA6V, qui est utilisée pour les opérations de recuit. L'invention revendique en conséquence les opérations de densification pour des matériaux métalliques, qui sont réalisées par une compression isostatique à chaud effectuée à une température inférieure à la température de recristallisation du matériau considéré.

## Revendications

1. Procédé de réparation d'une aube d'un compresseur de turbomachine en alliage de titane par rechargement des parties endommagées au moyen de la projection d'une poudre dudit métal sur ladite pièce, comprenant une étape de rechargement par laser desdites parties endommagées à l'aide de ladite poudre, **caractérisé en ce que** ladite étape est suivie d'une étape de compression isostatique à chaud, la température maximale imposée lors de ladite compression isostatique étant au plus égale à 680°C.

2. Procédé selon la revendication 1 dans lequel la pièce est maintenue à la température maximale pendant une durée au moins égale à 2 heures.

3. Procédé selon l'une des revendications 1 à 2 dans lequel la pression de la compression isostatique est au moins égale à 970 bars.

4. Procédé selon l'une des revendications 1 à 3 dans lequel la montée en température n'excède pas 350°C/h.

5. Procédé selon l'une des revendications 1 à 4 dans lequel la décroissance de la température en fin de compression isostatique n'excède pas 100°C/h.

6. Procédé selon l'une des revendications 1 à 5 dans lequel la décroissance de la pression en fin de compression isostatique n'excède pas 20 bars/min.

## Patentansprüche

1. Verfahren zum Reparieren einer Schaufel eines Turbomaschinenkompressors aus Titanlegierung durch Auftragsschweißen der beschädigten Teile durch Aufsprühen eines Pulvers des Metalls auf das Teil,
umfassend einen Schritt des Laser-Auftragsschweißens der beschädigten Teile mit Hilfe des Pulvers, **dadurch gekennzeichnet, dass** auf den Schritt ein Schritt des heißisostatischen Pressens folgt, wobei die maximale Temperatur, die während des isostatischen Pressens aufgebracht wird, höchstens 680 °C beträgt.

2. Verfahren nach Anspruch 1, wobei das Teil für eine Zeitdauer von mindestens gleich 2 Stunden auf der maximalen Temperatur gehalten wird.

3. Verfahren nach einem der Ansprüche 1 bis 2, wobei der Druck des isostatischen Pressens mindestens gleich 970 bar beträgt.

4. Verfahren nach einem der Ansprüche 1 bis 3, wobei die Temperaturerhöhung 350 °C/h nicht überschreitet.

5. Verfahren nach einem der Ansprüche 1 bis 4, wobei die Abnahme der Temperatur am Ende des isostatischen Pressens 100 °C/h nicht überschreitet.

6. Verfahren nach einem der Ansprüche 1 bis 5, wobei die Abnahme des Drucks am Ende des isostatischen Pressens 20 bar/min nicht überschreitet.

## Claims

1. A method for repairing a turbine engine compressor blade made of titanium alloy by refilling the damaged parts by spraying a powder of said metal onto said part, comprising a step of laser-refilling said damaged parts with the aid of said powder, **characterized in that** said step is followed by a step of hot isostatic pressing, the maximum temperature applied during said isostatic pressing being at most equal to 680°C.

2. The method as claimed in claim 1, wherein the part is maintained at the maximum temperature for a time at least equal two 2 hours.

3. The method as claimed in one of claims 1 or 2, wherein the pressure of the isostatic pressing is at least equal to 970 bar.

4. The method as claimed in one of claims 1 to 3, wherein the temperature rise does not exceed 350°C/h.

5. The method as claimed in one of claims 1 to 4, wherein the temperature decrease at the end of isostatic pressing does not exceed 100°C/h.

6. The method as claimed in one of claims 1 to 5, wherein the pressure decrease at the end of isostatic pressing does not exceed 20 bar/min.
